(19) **Europäisches Patentamt / European Patent Office / Office européen des brevets**

(11) **EP 3 806 007 B1**

(12) # EUROPEAN PATENT SPECIFICATION

(45) Date of publication and mention
of the grant of the patent:
**28.08.2024 Bulletin 2024/35**

(21) Application number: **19202123.6**

(22) Date of filing: **09.10.2019**

(51) International Patent Classification (IPC):
**G06Q 10/0631** (2023.01)   **G06Q 50/43** (2024.01)
**G06Q 10/047** (2023.01)

(52) Cooperative Patent Classification (CPC):
**G06Q 10/047; G06N 3/0442; G06N 3/0455;
G06N 3/0464; G06N 3/084; G06N 3/092;
G06N 7/01; G06Q 10/06311; G06Q 50/43**

(54) **METHODS, COMPUTER PROGRAMS AND SYSTEMS FOR ASSIGNING VEHICLES TO VEHICULAR TASKS AND FOR PROVIDING A MACHINE-LEARNING MODEL**

VERFAHREN, COMPUTERPROGRAMME UND SYSTEME ZUR ZUWEISUNG VON FAHRZEUGEN ZU FAHRZEUGAUFGABEN UND ZUR BEREITSTELLUNG EINES MODELLS DES MASCHINELLEN LERNENS

PROCÉDÉS, PROGRAMMES INFORMATIQUES ET SYSTÈMES D'ATTRIBUTION DE VÉHICULES À DES TÂCHES DE VÉHICULES ET DE FOURNITURE D'UN MODÈLE D'APPRENTISSAGE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.04.2021 Bulletin 2021/15**

(73) Proprietor: **Bayerische Motoren Werke Aktiengesellschaft
80809 München (DE)**

(72) Inventors:
• **Hamzehi, Sascha
85221 Dachau (DE)**
• **Franeck, Philipp
81379 München (DE)**

(56) References cited:
**US-A1- 2019 226 855**

• **ANONYMOUS: "Reinforcement learning - Wikipedia", 23 September 2019 (2019-09-23), XP055644207, Retrieved from the Internet <URL:https://en.wikipedia.org/w/index.php?title=Reinforcement_learning&oldid=917446307> [retrieved on 20191119]**
• **YU JAMES J Q ET AL: "Online Vehicle Routing With Neural Combinatorial Optimization and Deep Reinforcement Learning", IEEE TRANSACTIONS ON INTELLIGENT TRANSPORTATION SYSTEMS, IEEE, PISCATAWAY, NJ, USA, vol. 20, no. 10, 1 October 2019 (2019-10-01), pages 3806 - 3817, XP011748653, ISSN: 1524-9050, [retrieved on 20191001], DOI: 10.1109/TITS.2019.2909109**

## Description

### Field

Examples relate to a method, computer program and system for assigning a plurality of vehicles to a plurality of vehicular tasks and to a method, computer program and system for providing a machine-learning model.

### Background

With the availability of smartphones and high-speed internet, there has been an exponential increase in the research into new On Demand Mobility (ODM) applications. Among various ODM applications, Ride Sharing (RS) and Ride Hailing (RH) have become the most commonly known. In ride hailing services, the user requests a vehicle for a trip from pickup to drop-off locations. A single vehicle is only allowed to serve a single customer at a time. Ride sharing is a general case of ride hailing, where a single vehicle can combine multiple customers in a trip. Further factors may complicate the assignment between vehicles and ride requests, such as a battery level of a vehicle or a maintenance requirement. Due to computational challenges, fleet routing and maintenance tasks have traditionally been approached only on small scales, such as by the application of ad hoc non-collaborative strategies and subop-timal heuristics. This may be due to a lack of scalable and efficient dynamic methods for solving collaborative combinatorial problems without re-computing the same results over and over again. Specifically, the aspect of an optimal assignment between vehicles, requests and maintenance tasks within the city are of high interest.

Document YU JAMES J Q ET AL: "Online Vehicle Routing With Neural Combinatorial Optimization and Deep Reinforcement Learning", IEEE TRANSACTIONS ON INTELLIGENT TRANSPORTATION SYSTEMS, IEEE, PISCATAWAY, Nu, USA, vol. 20, no. 10, 1 October 2019 (2019-10-01), pages 3806-3817, describes a concept for deep reinforcement learning-based neural combinatorial optimization strategy. An online routing problem is transformed to a vehicle tour generation problem, and a structural graph embedded pointer network is proposed to develop these tours iteratively. Furthermore, since constructing supervised training data for the neural network is impractical due to the high computation complexity, a deep reinforcement learning mechanism with an unsupervised auxiliary network to train the model parameters is described.

### Summary

The invention is defined by the appended claims 1-13.

Embodiments of the present disclosure provide a method for assigning a plurality of vehicles to a plurality of vehicular tasks. The method comprises obtaining information on the plurality of vehicular tasks. The method comprises obtaining information on the plurality of vehicles. The method comprises providing the information on the plurality of vehicular tasks and the information on the plurality of vehicles as input to a machine-learning model. The machine-learning model is suitable for evaluating a plurality of assignments between the plurality of vehicles and the plurality of vehicular tasks. The method comprises assigning the plurality of vehicles to the plurality of vehicular tasks based on an output of the machine-learning model.

By using a machine-learning model to quickly perform an evaluation of assignments between the plurality of vehicles and the plurality of vehicular tasks, a computationally intensive optimization of the assignment may be foregone, reducing a computational effort required to perform the assignment.

For example, the plurality of vehicular tasks may comprise at least one of a plurality of transportation tasks, a plurality of vehicular charging tasks, a plurality of vehicular maintenance tasks and a plurality of vehicular relocation tasks. In other words, embodiments may be used in a variety of different situations in which vehicular tasks, such as ride hailing assignments or vehicle maintenance, are to be scheduled for a fleet of vehicles.

In at least some embodiments, the output of the machine-learning model indicates a favorability of the plurality of assignments between the plurality of vehicles and the plurality of vehicular tasks. The favorability of the plurality of assignments may, in turn, be used to select the assignments that are to be performed.

In various embodiments, the information to be processed may be provided as a graph, e.g. a graph comprising the plurality of vehicles and the plurality of vehicular tasks as nodes of the graphs. Assignments between the vehicles and the vehicular tasks may be modeled using the edges of the graph. In other words, the information on the plurality of vehicular tasks and the information on the plurality of vehicles may be provided as a graph to the machine-learning model. The graph may comprise the plurality of vehicular tasks and the plurality of vehicles as nodes and a plurality of potential assignments between vehicles and vehicular tasks as edges of the graph. The output of the machine-learning model may indicate the favorability of the plurality of assignments using the edges of the graph. In this case, the machine-learning model may be used to evaluate the assignments and annotate the respective edges of the graph.

In at least some embodiments, assigning the plurality of vehicles to the plurality of vehicular tasks comprises selecting at least a subset of the plurality of assignments based on a selection criterion. The selection criterion may be based on the favorability of the respective assignment. In other words, the favorability may be used to choose the assignments from a plurality of potential assignments.

For examples, the information on the plurality of vehicular tasks may comprise, for each vehicular task, at least one of information on a starting position of the vehicular task, information on a destination position of the vehicular task and information on a time and/or duration of the vehicular task. Additionally or alternatively, the information on the plurality of vehicles may comprise for each vehicle at least one of information on a current position of the vehicle, information on an availability of the vehicle, information on a destination position of the vehicle, and information on a charging status of the vehicle. At least some of these properties may be used to perform the assignment between the vehicles and the vehicular tasks.

In at least some embodiments, the machine-learning model may be trained using a method for providing a machine-learning model, as introduced below.

Embodiments of the present disclosure further provide a method for providing a machine-learning model. The method comprises obtaining training input data for training the machine-learning model. The training input data comprises training information on a plurality of vehicular tasks and training information on a plurality of vehicles. The method comprises training the machine-learning model to assign the plurality of vehicles to the plurality of vehicular tasks using the training input data. The training is performed with the aim of improving a result of an objective function. The objective function is suitable for evaluating a favorability of a plurality of assignments between the plurality of vehicles and the plurality of vehicular tasks. The method comprises providing the machine-learning model. For example, the machine-learning model may be used to perform the assignment of the plurality of vehicular tasks and the plurality of vehicles as introduced above.

In some embodiments, an output of the machine-learning model indicates a favorability of the plurality of assignments between the plurality of vehicles and the plurality of vehicular tasks. The favorability of the plurality of assignments may, in turn, be used to select the assignments that are to be performed.

In at least some embodiments, the machine-learning model may be trained using reinforcement learning. A reward function of the reinforcement learning may be based on the objective function. Reinforcement learning may be used to iteratively train a machine-learning model to become better at a task at hand, as evaluated by the reward function.

For example, the machine-learning model may be trained by repeatedly inputting the training input data into the machine-learning model, assigning the plurality of vehicles to the plurality of vehicular tasks based on an output of the machine-learning model, evaluating the assignment between the plurality of vehicles and the plurality of vehicular tasks using the objective function, and adjusting the machine-learning model based on a result of the evaluation. This may enable an iterative improvement of the machine-learning model during the reinforcement learning process.

In at least some embodiments, the method comprises subdividing the training input data into a plurality of batches of training input data. Each batch of the plurality of batches may be input to the machine-learning model separately. The assignment of the plurality of vehicles to the plurality of vehicular tasks may be performed separately for each batch. The evaluation of the assignment may be performed separately for each batch. The batching may be used to limit the size of the task at hand, while providing multiple evaluation opportunities for each epoch of the reinforcement learning.

The objective function may be used to evaluate a quality or favorability of the assignments between the vehicles and the tasks. A large variety of features may be used to evaluate the assignments. For examples, the objective function may be based on at least one of a mean waiting time of the plurality of vehicular tasks, a maximal waiting time of the plurality of vehicular tasks, a time window of a vehicular task, an amount of empty runs of the plurality of vehicles, an amount of wear of the plurality of vehicles, an amount of consumption of the plurality of vehicles, a distance travelled by the plurality of vehicles, a demand prediction for at least a subset of the plurality of vehicular tasks, a predictive maintenance of the plurality of vehicles, an amount of available vehicles or vehicle resources, a number of unoccupied seats of the plurality of vehicles, an amount of unused or used capacity of the plurality of vehicles, and an amount of unused or used capacity of one or more charging or maintenance stations. In some embodiments, the objective function may be based on one or more personalized features that is based on feedback from one or more users, e.g. user ratings. For example, the objective function may be based on a rating of a route for a transportation task (such as five stars for a given route), or similar popularity metrics.

Embodiments of the present disclosure further provide a computer program having a program code for performing at least one of the methods, when the computer program is executed on a computer, a processor, or a programmable hardware component.

Embodiments of the present disclosure further provide a system comprising one or more processing modules and one or more storage modules. The system is suitable for assigning a plurality of vehicles to a plurality of vehicular tasks. The system is configured to obtain information on the plurality of vehicular tasks. The system is configured to obtain information on the plurality of vehicles. The system is configured to provide the information on the plurality of vehicular tasks and the information on the plurality of vehicles as input to a machine-learning model. The machine-learning model is suitable for evaluating a plurality of assignments between the plurality of vehicles and the plurality of vehicular tasks. The system is configured to assign the plurality of vehicles to the plurality of vehicular tasks based on an output of the machine-learning model.

Embodiments of the present disclosure further provide a system comprising one or more processing modules and one or more storage modules. The system is suitable for providing a machine-learning model. The system is configured to obtain training input data for training the machine-learning model. The training input data comprises training information on a plurality of vehicular tasks and training information on a plurality of vehicles. The system is configured to train the machine-learning model to assign the plurality of vehicles to the plurality of vehicular tasks using the training input data. The training is performed with the aim of improving a result of an objective function. The objective function is suitable for evaluating a favorability of a plurality of assignments between the plurality of vehicles and the plurality of vehicular tasks. The system is configured to provide the machine-learning model.

**Brief description of the Figures**

Some examples of apparatuses and/or methods will be described in the following by way of example only, and with reference to the accompanying figures, in which

Figs. 1a and 1b    show flow charts of embodiments of a method for assigning a plurality of vehicles to a plurality of vehicular tasks;

Fig. 1c    shows a block diagram of an embodiment of a system for assigning a plurality of vehicles to a plurality of vehicular tasks;

Figs. 2a and 2b    show flow charts of embodiments of a method for providing a machine-learning model;

Fig. 2c    shows a block diagram of an embodiment of a system for providing a machine-learning model;

Fig. 3    shows a schematic overview of an assignment between vehicles and vehicular tasks;

Fig. 4    shows a schematic flow chart of a reinforcement learning approach;

Fig. 5    shows a block diagram of an embodiment of a machine-learning model; and

Fig. 6    shows a schematic diagram of actions performed by an algorithm in a pointer network architecture.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

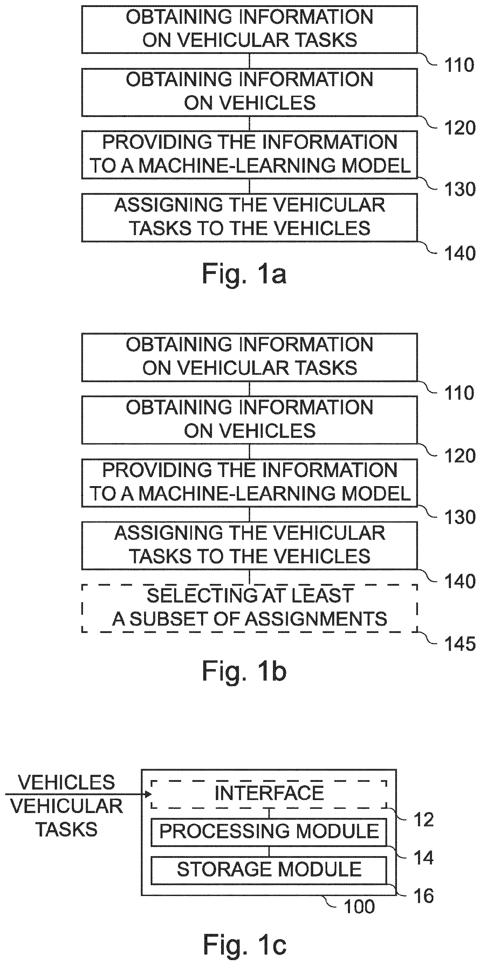

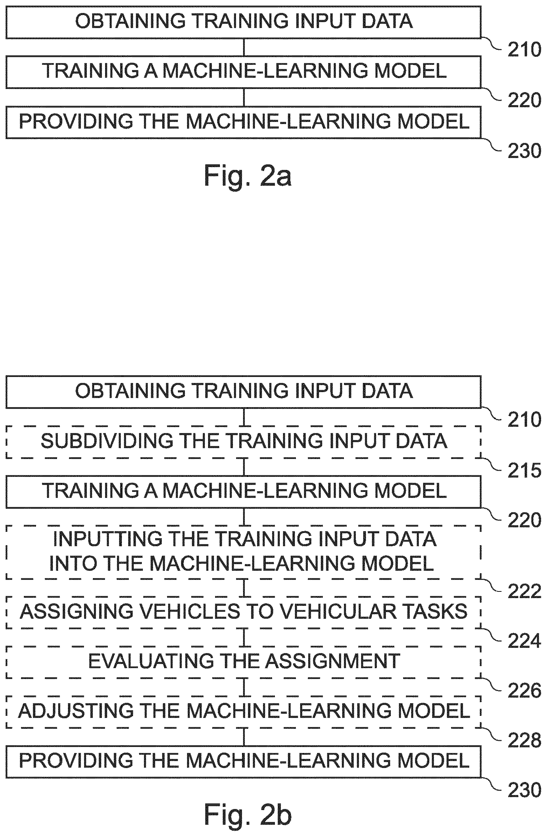

Figs. 1a and 1b show flow charts of embodiments of a method, i.e. of a computer-implemented method, for assigning a plurality of vehicles to a plurality of vehicular tasks. The method comprises obtaining 110 information on the plurality of vehicular tasks. The method comprises obtaining 120 information on the plurality of vehicles. The method comprises providing 130 the information on the plurality of vehicular tasks and the information on the plurality of vehicles as input to a machine-learning model. The machine-learning model is suitable for evaluating a plurality of assignments between the plurality of vehicles and the plurality of vehicular tasks. The method comprises assigning 140 the plurality of vehicles to the plurality of vehicular tasks based on an output of the machine-learning model. For example, the method may be executed by a computer system, e.g. the system of Fig. 1c. In some embodiments, the method may further comprise at least some features of the method of Fig. 2a and/or 2b.

Fig. 1c shows a block diagram of an embodiment of a corresponding system 100 for assigning the plurality of vehicles to the plurality of vehicular tasks. The system 100 comprises one or more processing modules 14 and one or more storage modules 16 that are coupled to the one or more processing modules 14. The system 100 may optionally comprise one or more interfaces 12 that may be coupled to the one or more processing modules. In general, the system 100 may be configured to execute the method of Figs. 1a and/or 1b. More specifically, the one or more processing modules 14 may be configured to execute the method of Figs. 1a and/or 1b, e.g. in conjunction with the one or more interfaces 12 and/or with the one or more processing modules 16. For example, the system is configured to obtain the information on the plurality of vehicular tasks. The system is configured to obtain the information on the plurality of vehicles. The system is configured to provide the information on the plurality of vehicular tasks and the information on the plurality of vehicles as input to the machine-learning model. The machine-learning model is suitable for evaluating the plurality of assignments between the plurality of vehicles and the plurality of vehicular tasks. The system is configured to assign the plurality of vehicles to the plurality of vehicular tasks based on an output of the machine-learning model. In some embodiments, the system may be further configured to execute at least some features of the method of Figs. 2a and/or 2b.

The following description relates both to the method of Figs. 1a and/or 1b and to the system of Fig. 1c.

At least some embodiments of the present disclosure relate to a method, computer program and system for assigning a plurality of vehicles to a plurality of vehicular tasks. This assignment between vehicles and vehicular tasks lies at the core of a multitude of different applications, such as e.g. ride hailing or ride sharing, where ride requests for transporting people are matched to available vehicles. In such applications, the determination of an optimum assignment between vehicular tasks (such as ride requests) and vehicles may be infeasible. While an optimum solution exists, the computational effort to reach the optimum solution rule out such an approach. Accordingly, the computational challenging problem of the assignment or matching of vehicles to requests while maintaining the fleet operability are of high interest. Such combinatorial optimization problems can be modeled with mixed integer or linear programming problems under the name of VRPs (Vehicle Routing Problems) and Travelling Salesman Problems (TSPs, a specific instance of a VRP). At the same time efficient algorithms, such as CONCORDE, ALNS (Adaptive Large Neighborhood Search), VNS (Variable Neighborhood Search), Taboo Search, Simulated Annealing, Genetic Algorithms, and heuristics such as LKH (Lin-Kernighan heuristic) or 2regret for solving such assignments or matchings have been proposed. The named algorithms iteratively solve combinatorial problems up to optimality, whereas heuristics are designed to efficiently find a close to optimal solutions in a short amount of time. Both approaches have their advantages and disadvantages, in the sense of trading of solution quality with computational efficiency. The determination of the solution to VRPs, TSPs in 2D Euclidean graphs and similar problems such as the Knapsack problems are proven to be NP-hard. In addition, heuristics can be highly unstable in their performance depending on the problem structure or complexity. In embodiments, instead of using a combinatorial or a heuristic approach, machine-learning is used to perform the assignment between the vehicular tasks and the vehicle. Embodiments of the present disclosure originate from the concept of finding a good heuristic quickly instead of requiring an intensive hand-crafting of heuristics and solvers that work only for individual problems.

Accordingly, embodiments may be used for a multitude of different vehicular tasks. In this context, a vehicular task may be a task that may be assigned to a vehicle, and that is to be performed by the vehicle. For examples, a vehicular task may be a transportation task, e.g. a transportation task of a ride hailing service or of a ride sharing service. In this case, the vehicular task may be generated as a user books a ride on the ride hailing or ride sharing system, which may be assigned to a vehicle, which is then used to perform the transportation tasks. In general, these tasks may be performed by the plurality of vehicles, which may further also be denoted a fleet of vehicles. The operation of a fleet of vehicles might not only contain the "core" vehicular tasks, such as transportation. In many cases, additional tasks, such as maintenance, charging/refueling, or relocation may also be performed by the vehicles, e.g. in order to ensure a satisfactory operation of the fleet. Therefore, in addition to transportation tasks, additional maintenance tasks may be performed by the vehicle. In other words, the plurality of vehicular tasks may comprise at least one of a plurality of transportation tasks (i.e. ride hailing transportation tasks or ride sharing transportation tasks), a plurality of vehicular charging/refueling tasks (e.g. if the vehicle is an electric vehicle), a plurality of vehicular maintenance tasks (e.g. to perform routine maintenance and/or cleaning) and a plurality of vehicular relocation tasks (e.g. to move a vehicle to a position where demand for a vehicular task is expected).

The method comprises obtaining 110 the information on the plurality of vehicular tasks. For example, the information on the plurality of vehicular tasks may be obtained via an interface, e.g. the interface 12 of the system 100. The information on the plurality of vehicular tasks may be obtained from a database, from a file system, or as messages via a message-passing interface. The information on the plurality of vehicular tasks may comprise, for each vehicular tasks, the specifics of the vehicular task, e.g. a location of the vehicular task (e.g. starting position and destination in case of a transportation task, a position of a charging or maintenance station), a time of the vehicular task (e.g. now, at a specific time or within a specific time interval, a maximal delay until start of the vehicular task, a maximal time for picking up additional passengers) and a duration of the vehicular task. In other words, the information on the plurality of vehicular tasks may comprise for each vehicular task at least one of information on a starting position of the vehicular task, information on a destination position of the vehicular task and information on a time and/or duration of the vehicular task.

The method comprises obtaining 120 the information on the plurality of vehicles. Again, the information on the plurality of vehicles may be obtained via an interface, e.g. the interface 12 of the system 100. The information on the plurality of vehicles may be obtained from a database, from a file system, or as messages via a message-passing interface. The information on the plurality of vehicles may comprise, for each vehicle, information on temporary properties of the vehicles, such as the current position of the vehicle, a number of taken or available seats of the vehicle, a charging status, fuel status or available of the vehicle etc., and/or information on permanent features of the vehicle, such as a boot capacity of the vehicle, a number of seats of the vehicle, a vehicle type of the vehicle. In other words, the information on the plurality of vehicles may comprise for each vehicle at least one of information on a current position of the vehicle, information on an availability of the vehicle, information on a destination position of the vehicle, and information on a charging status of the vehicle.

Once the information is obtained, the machine-learning model may be used to aid in the assignment of the plurality of vehicular tasks to the plurality of vehicles. Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data.

Machine-learning models are trained using training input data. Many different approaches may be used to train a machine-learning model. For example, supervised learning, semi-supervised learning or unsupervised learning may be used. In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g. a classification algorithm, a regression algorithm or a similarity learning algorithm. In unsupervised learning, (only) input data might be supplied, and an unsupervised learning algorithm may be used to find structure in the input data, e.g. by grouping or clustering the input data, finding commonalities in the data.

In at least some embodiments, reinforcement learning (or a derived concept) is used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards). This may be the case in embodiments - the machine-learning model may be trained to perform the assignment between vehicular tasks and vehicles. During the training, various approaches may be tried and evaluated based on an objective function that is denoted the reward function. The reward function is used to calculate the cumulative reward. Based on the calculated reward, the machine-learning model may be altered to perform the actions that have led to a higher cumulative reward, leading to a machine-learning model that becomes iteratively better at assigning vehicular tasks to vehicles. Some embodiments of the method, computer program and system of Figs. 2a to 2c provide an example of a machine-learning model that is trained using reinforcement learning. A model that is trained using the method, computer program and/or system of Figs. 2a to 2c may be used by the method, computer program and/or system of Figs. 1a to 1c.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input. In at least some embodiments, the machine-learning model may be deep neural network, e.g. a neural network comprising one or more layers of hidden nodes (i.e. hidden layers), preferably a plurality of layers of hidden nodes. In some embodiments, the machine-learning model may be a pointer network, as introduced in more detail below.

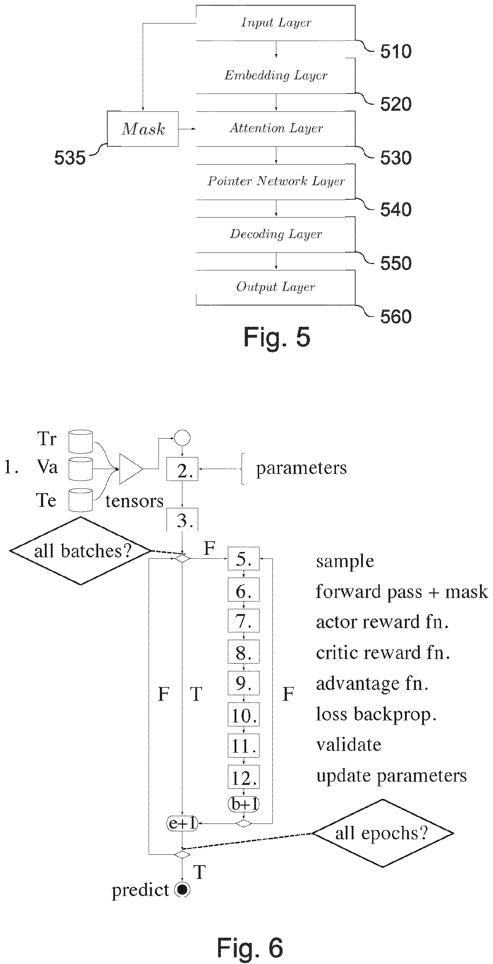

Machine-learning models are usually used by applying input data to an input of the machine-learning model, and by using the output data that is provided at an output of the machine-learning model. In artificial neural networks, the input data is provided at the input nodes of the ANN, the input data is subsequently transformed based on the weights of the edges between the nodes of the artificial neural network, and finally output by the output nodes of the ANN. In this case, the previously obtained information is provided as input to the machine-learning model. For example, the ANN may comprise one or more of an embedding layer, a (masked) attention layer, a pointer network layer, and a decoding layer, as shown in Fig. 5, to transform the data between input layer and output layer. The method comprises providing 130 the information on the plurality of vehicular tasks and the information on the plurality of vehicles as input to a machine-learning model.

In some embodiments, personalized features may also be provided as input to the machine-learning model, e.g. personalized features of users that have contributed to the plurality of vehicular tasks, or regardless of affiliation of the user with the plurality of vehicular tasks. For example, user ratings related to a quality of a plurality of routes may be provided as input to the machine-learning models. For example, the user ratings may be provided on a scale (e.g. from 0 to 5) or as a binary rating (thumbs up or down).

The machine-learning model is suitable for evaluating a plurality of assignments between the plurality of vehicles and the plurality of vehicular tasks. For example, a plurality of potential assignments may exist between the plurality of vehicular tasks and the plurality of vehicles. In general, each vehicular action of the plurality of vehicular actions may be assigned to a vehicle of the plurality of vehicles, yielding the plurality of potential assignments. This plurality of potential assignments may be reduced, e.g. based on one or more filter criteria. For examples, it might not be necessary to assign a vehicle charging task to a vehicle that is fully or mostly charged, or it might be futile to assign a vehicular transportation task for transporting a large group of people to a vehicle that has only a single available seat. Consequently, the plurality of potential assignments may be limited by the capabilities of the vehicles and the requirements of the vehicular tasks. The machine-learning model may now be used to (and therefore be suitable for) evaluate the plurality of potential assignments, or at least a subset of the plurality of potential assignments. Accordingly, the plurality of assignments may correspond to the plurality of potential assignments, or to the subset of potential assignments, in case only a subset of the potential assignments are evaluated.

Some potential assignments may be more favorable than other assignments. For example, it may be more favorable to use a vehicle that is closer to a starting position of a transportation task, and less favorable to use a vehicle that is further away for that task. In many cases, it is not quite as straightforward - for example, two vehicles may be close to a starting point of a transportation task, but one of them may be fully charged, and the other one nearly empty - if a charging station is close to a destination of the transportation task, it may be useful to use the nearly empty vehicle for the task. The machine-learning model may be trained to reflect such multi-variate decisions, to provide an indication as to which assignments of the plurality of potential assignments is favorable. In other words, the machine-learning model may be trained to evaluate the plurality of assignments, to provide an indication as to the quality or favorability of the plurality of assignments. The output of the machine-learning model may provide the evaluation of the plurality of assignments. In other words, the output of the machine-learning model may indicate a favorability of the plurality of assignments between the plurality of vehicles and the plurality of vehicular tasks.

In at least some embodiments, a graph may be used to model the relationship between the plurality of vehicular tasks, the plurality of vehicles and the plurality of (potential) relationships. The information on the plurality of vehicular tasks and the information on the plurality of vehicles may be provided 130 as a graph to the machine-learning model. Within the graph, the plurality of vehicular tasks and the plurality of vehicles may be nodes of the graph, and the plurality of (potential) assignments may be edges of the graph. In other words, the graph may comprise the plurality of vehicular tasks and the plurality of vehicles as nodes and the plurality of potential assignments between vehicles and vehicular tasks as edges of the graph. In some embodiments, the edges may be contained in the graph that is provided to the machine-learning model, in some other embodiments the edges may be added by the machine-learning model. The output of the machine-learning model may indicate the favorability of the plurality of assignments using the edges of the graph. For example, the edges of the graph may be annotated to indicate the favorability of the plurality of assignments, e.g. by annotating the edges with a favorability score.

The method comprises assigning 140 the plurality of vehicles to the plurality of vehicular tasks based on an output of the machine-learning model. As laid out above, the machine-learning model may be used to evaluate the plurality of assignments. The assignments 140 may be based on the evaluation of the plurality of assignments. For example, assigning 140 the plurality of vehicles to the plurality of vehicular tasks may comprise selecting, among the plurality of (potential) assignments, a subset of assignments based on the output of the machine-learning model, based on a selection criterion. The selection criterion may be used to select assignments among the plurality of assignments that provide a high overall favorability/utility. Accordingly, a subset of assignments that has a higher overall favorability (or quality) than another subset of assignments may be selected, e.g. by selecting assignments that have a high favorability score. Accordingly, assigning 140 the plurality of vehicles to the plurality of vehicular tasks comprises selecting 145 at least a subset of the plurality of assignments based on a selection criterion, the selection criterion being based on the favorability of the respective assignment.

The one or more interfaces 12 may correspond to one or more inputs and/or outputs for receiving and/or transmitting information, which may be in digital (bit) values according to a specified code, within a module, between modules or between modules of different entities. For example, the one or more interfaces 12 may comprise interface circuitry configured to receive and/or transmit information.

In embodiments the one or more processing modules 14 may be implemented using one or more processing units, one or more processing devices, any means for processing, such as a processor, a computer or a programmable hardware component being operable with accordingly adapted software. In other words, the described function of the ne or more processing modules 14 may as well be implemented in software, which is then executed on one or more programmable hardware components. Such hardware components may comprise a general-purpose processor, a Digital Signal Processor (DSP), a micro-controller, etc.

In at least some embodiments, the one or more storage modules 16 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the method, system and computer program are mentioned in connection with the proposed concept or one or more examples described above or below (e.g. Fig. 2a to Fig. 6). The method, system and computer program may comprise one or more additional optional features corresponding to one or more aspects of the proposed concept or one or more examples described above or below.

Figs. 2a and 2b show flow charts of embodiments of a method for providing a machine-learning model. The method comprises obtaining 210 training input data for training the machine-learning model. The training input data comprising training information on a plurality of vehicular tasks and training information on a plurality of vehicles. The method comprises training 220 the machine-learning model to assign the plurality of vehicles to the plurality of vehicular tasks using the training input data. The training is performed with the aim of improving a result of an objective function. The objective function is suitable for evaluating a favorability of a plurality of assignments between the plurality of vehicles and the plurality of vehicular tasks. The method comprises providing 230 the machine-learning model. For example, the method may be executed by a computer system, e.g. the system of Fig. 1c. In some embodiments, the method may further comprise at least some features of the method of Fig. 1a and/or 1b.

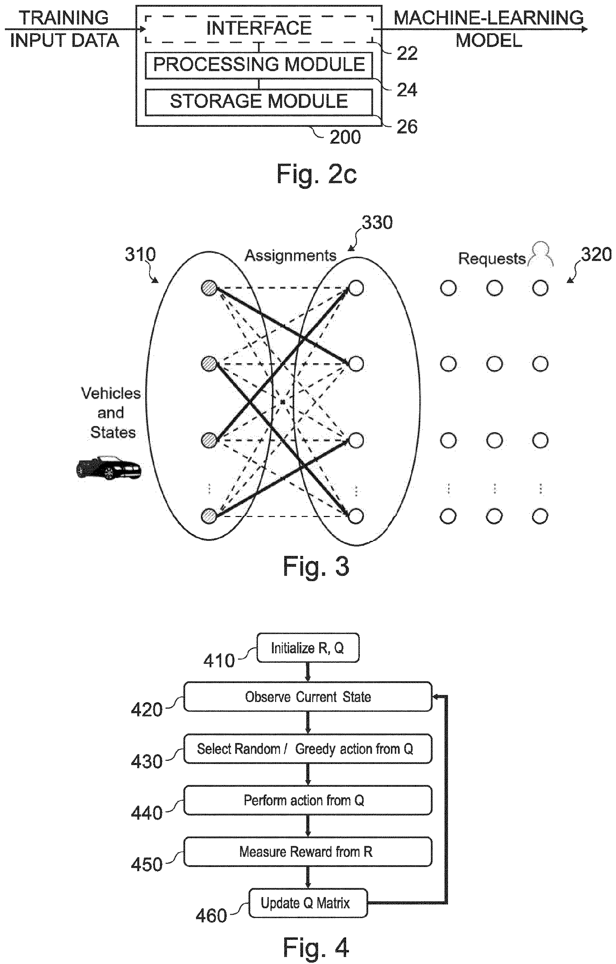

Fig. 2c shows a block diagram of an embodiment of a corresponding system 200 for providing the machine-learning model. The system 200 comprises one or more processing modules 24 and one or more storage modules 26 that are coupled to the one or more processing modules 24. The system 200 may optionally comprise one or more interfaces 22 that may be coupled to the one or more processing modules. In general, the system 200 may be configured to execute the method of Figs. 2a and/or 2b. More specifically, the one or more processing modules 24 may be configured to execute the method of Figs. 2a and/or 2b, e.g. in conjunction with the one or more interfaces 22 and/or with the one or more processing modules 26. For example, the system is configured to obtain the training input data. The system is configured to train the machine-learning model to assign the plurality of vehicles to the plurality of vehicular tasks using the training input data. The system is configured to provide the machine-learning model. In some embodiments, the system may be further configured to perform at least some features of the method of Fig. 1a and/or 1b.

The following description relates both to the method of Figs. 2a and/or 2b and to the system of Fig. 2c.

Some embodiments of the present disclosure relate to a method, computer program and system for training the machine-learning model. In connection with Figs. 1a to 1c, an application of a machine-learning model in the assignment of vehicular tasks to vehicles is shown. The method, computer program and system of Figs. 2a to 2c may now be used to train such a machine-learning model. This is in no way a mandatory feature - the machine-learning model of Figs. 1a to 1c may alternatively trained using other approaches, but the method computer program and system of Figs. 2a to 2c may provide at least some embodiments that yield a machine-learning model that is suitable for use with the method, computer program and system of Figs. 1a to 1c.

The method comprises obtaining 210 the training input data for training the machine-learning model. For example, the training input data may be obtained via an interface, e.g. the interface 22 of the system 200. The training input data may be obtained from a database, from a file system, or from a data structure that is stored in a computer memory. The training input data comprises training information on the plurality of vehicular tasks and training information on the plurality of vehicles. In at least some embodiments, the training information on the plurality of vehicular tasks may be implemented similar to the information on the plurality of vehicular tasks introduced in connection with Figs. 1a to 1c, and the training information on the plurality of vehicles may be implemented similar to the information on the plurality of vehicles. Accordingly, the plurality of vehicular tasks and the plurality of vehicles may be implemented similar to the plurality of vehicular tasks and the plurality of vehicles introduced in connection with Figs. 1a to 1c. The term "training information" may merely indicate that the respective data is suitable for, i.e. designed for, training the machine-learning model. For example, the training information on the plurality of vehicular tasks and training information on the plurality of vehicles may comprise information on the plurality of vehicular tasks and information on the plurality of vehicles that is representative of the respective data that is to be processed by the machine-learning model, e.g. in order to obtain a machine-learning model that is suitable for the task at hand, e.g. suitable for evaluating a favorability of a plurality of assignments between the plurality of vehicles and the plurality of vehicular tasks. In some embodiments, the training input data may further comprise personalized features. For example, user ratings related to a quality of a plurality of routes may be provided as part of the training input data.

The method comprises training 220 the machine-learning model to assign the plurality of vehicles to the plurality of vehicular tasks using the training input data. In other words, the machine-learning model may be provided with the training input data, which represents a plurality of scenarios of vehicles and vehicular tasks, and with the task of finding ever better ways of assigning vehicles to vehicular tasks. The machine-learning model may be iteratively tweaked to iteratively improve the assignment between the plurality of vehicles and the plurality of vehicular tasks. To decide on which assignments have merits, the objective function is used. In general, the objective function may be a function that provides an objective measure of a quality of an assignment or of the plurality of assignments. For example, based on the objective function, a first plurality of assignments may be deemed to have a higher quality than a second plurality of assignments. Consequently, the training is performed with the aim of improving the result of the objective function.

In general, the objective function may have many components, i.e. factors that determine a quality of an assignment or of a plurality of assignments. For example, the objective function may be based on at least one of a mean waiting time of the plurality of vehicular tasks, a maximal waiting time of the plurality of vehicular tasks, a time window of a vehicular task (e.g. comprising one or more of a start time, and end time, a service time, and a maximal return time of a trip/vehicular task), an amount of empty runs of the plurality of vehicles, an amount of wear of the plurality of vehicles, an amount of consumption of the plurality of vehicles, a distance travelled by the plurality of vehicles, a demand prediction for at least a subset of the plurality of vehicular tasks, a predictive maintenance of the plurality of vehicles, an amount of available vehicles or vehicle resources, a number of unoccupied seats of the plurality of vehicles, an amount of unused or used capacity of the plurality of vehicles, and an amount of unused or used capacity of one or more charging or maintenance stations. In some embodiments, the objective function may be based on one or more personalized features from one or more users. For example, a lower mean waiting time of the plurality of vehicular tasks may result in a higher quality measure, as customers might prefer to be served quickly. In addition, a lower maximal waiting time of the plurality of vehicular tasks may result in a higher quality measure, for the same reasons. A time window of the vehicular task may be compared against an availability of a vehicle, e.g. in case a vehicle is due for maintenance or in case a shift of a driver ends. A lower amount of empty runs of the plurality of vehicles may result in a higher quality measure for an operator of the plurality of vehicles, as a utilization of the vehicles may be higher. Furthermore, both a lower amount of wear and a lower amount of consumption of the plurality of vehicles may result in a higher quality measure. A distance travelled by the plurality of vehicles is not quite as straightforward, and could be good (leading to higher earnings) or bad (if it coincides with empty runs). Furthermore, a demand prediction for at least a subset of the plurality of vehicular tasks may influence the objective function, as in times of high demand, more weight may be given to transportation tasks, and lower weight may be given to vehicle maintenance or charging tasks. In addition, in a predictive maintenance of the plurality of vehicles, more weight may be given to vehicle maintenance ahead of possible failures. Furthermore, an amount of available vehicles or vehicle resources, such as a number of unoccupied seats of the plurality of vehicles, an amount of unused or used capacity of the plurality of vehicles, may be used to determine the objective function, e.g. so a higher quality measure is achieved if the available resources are tightly matched to the vehicular tasks, avoiding tasks in which large vehicles are used for single passengers or small loads. Furthermore, an amount of unused or used capacity of one or more charging or maintenance stations may influence the objective function, e.g. to distribute the utilization of the charging or maintenance stations over the day.

In at least some embodiments, the machine-learning model is trained 220 using reinforcement learning. As laid out above, in reinforcement learning, one or more software actors (called "software agents") are trained to take actions in an environment. In embodiments, the environment may be a simulated environment that is based on the plurality of vehicles, the plurality of vehicular tasks, and a road environment, which may optionally comprise other vehicles or parameters such as traffic as well. The one or more software actors may assign the plurality of vehicular tasks to the plurality of vehicles. Based on the taken actions, i.e. the plurality of assignments, a reward is calculated. In embodiments, the reward function of the reinforcement learning may be based on the objective function. In other words, the objective function may be used to calculate the reward in the reinforcement learning-based training of the machine-learning model. Reinforcement learning is based on training the one or more software agents to choose the actions such, that the cumulative reward is increased, leading to software agents that become better at the task they are given (as evidenced by increasing rewards). In embodiments, the assignments between the vehicles and the vehicular tasks may be repeatedly performed. Between the repetitions, the machine-learning model may be adjusted based on the assignments that have led to a high (or low, depending on implementation) reward.

For example, the machine-learning model is trained 220 by repeatedly (e.g. at least two times, at least five times, at least ten times, at least 20 times, at least 50 times, at least 100 times, at least 1000 times) performing a group of training tasks (or method steps). For example, the machine-learning model may be trained 220 by repeatedly:

a) inputting 222 the training input data into the machine-learning model,
b) assigning 224 the plurality of vehicles to the plurality of vehicular tasks based on an output of the machine-learning model,
c) evaluating 226 the assignment between the plurality of vehicles and the plurality of vehicular tasks using the objective function, and
d) adjusting 228 the machine-learning model based on a result of the evaluation.

One repetition of the above tasks may be denoted an "epoch" in reinforcement learning. One Epoch is when the entire set of training input data is passed forward and backward through the machine-learning model once. Within an epoch, a plurality of batches of training input data may be input into the machine-learning model, used to perform the assignment and evaluated. For example, to keep the problem size small, the training data may be subdivided (i.e. "batched") into a plurality of batches, which may be separately provided to the machine-learning model. In other words, the method may comprise subdividing 215 the training input data into a plurality of batches of training input data. Each batch of the plurality of batches may be input to the machine-learning model separately. Accordingly, the assignment of the plurality of vehicles to the plurality of vehicular tasks may be performed separately for each batch. In addition, the evaluation of the assignment may be performed separately for each batch.

Based on the training input data, the machine-learning model may provide an output. In the reinforcement learning-based training of the machine-learning model, the one or more software actors (which may act based on the machine-learning model) may assign a favorability to assignments of the plurality of (potential) assignments, based on the reward function, in order to increase or maximize the reward. In the present case, the assignment 224 of the plurality of vehicles may occur based on the output of the machine-learning model, i.e. not within the machine-learning model. Accordingly, the reward function may be based on the assignment 224 of the plurality of vehicles, which is in turn based on the output of the machine-learning model. This assignment may be evaluated 226 using the objective function, e.g. using the reward function. In other words, the software agents may assign a favorability to assignments of the plurality of (potential) assignments. The plurality of assignments may, in turn, be based on the assigned favorability of the assignments. The objective function, or reward function, may in turn be used to evaluate the assignments, acting as an indirect measure of the quality of the favorability ratings. Based on the result of the evaluation, the machine-learning model may be adjusted, e.g. by incorporating a behavior of software agents that has led to a higher reward.

The objective function is suitable for evaluating a favorability of a plurality of assignments between the plurality of vehicles and the plurality of vehicular tasks. In other words, the machine-learning model may be trained to evaluate the plurality of assignments, to provide an indication as to the quality or favorability of the plurality of assignments. The output of the machine-learning model may provide the evaluation of the plurality of assignments. In other words, the output of the machine-learning model may indicate a favorability of the plurality of assignments between the plurality of vehicles and the plurality of vehicular tasks.

The method further comprises providing 230 the machine-learning model, e.g. as a deep neural network. For example, the machine-learning model may be provided via a computer-readable storage.

The one or more interfaces 22 may correspond to one or more inputs and/or outputs for receiving and/or transmitting information, which may be in digital (bit) values according to a specified code, within a module, between modules or between modules of different entities. For example, the one or more interfaces 22 may comprise interface circuitry configured to receive and/or transmit information.

In embodiments the one or more processing modules 24 may be implemented using one or more processing units, one or more processing devices, any means for processing, such as a processor, a computer or a programmable hardware component being operable with accordingly adapted software. In other words, the described function of the ne or more processing modules 24 may as well be implemented in software, which is then executed on one or more programmable hardware components. Such hardware components may comprise a general-purpose processor, a Digital Signal Processor (DSP), a micro-controller, etc.

In at least some embodiments, the one or more storage modules 26 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the method, system and computer program are mentioned in connection with the proposed concept or one or more examples described above or below (e.g. Fig. 1a to 1c, Fig. 6). The method, system and computer program may comprise one or more additional optional features corresponding to one or more aspects of the proposed concept or one or more examples described above or below.

At least some embodiments relate to a neural network model (i.e. the machine-learning model) for on-demand mobility (ODM) fleet management.

For an operator of a fleet (e.g. the plurality of vehicles), it may be useful to improve fleet KPI's (Key Performance Indicators): fleet utilization (e.g absolute/mean tour/assignment length, empty mileage of vehicles), fleet maintenance and customer satisfaction (e.g. waiting time for customers), which may result in higher revenue. Additional challenges may relate to the computation complexity, efficiency and re-use of calculated solutions (to improve the scalability). For this purpose, artificial intelligence may be used to exploit data structures for higher improvement efficiency.

In some systems, improvements may be performed by a human fleet operator, the driver may be self-responsible for vehicle utilization, or traditional optimization strategies may be employed.

At least some embodiments of the present disclosure are aimed at finding a suitable network structure that is able to find suitable approaches for the given aim. This may go hand in hand with finding reasonable training data to enable learning for the network, resulting in higher improvement efficiency and solution quality. At least some embodiments may solve or approach combinatorial collaborative fleet maintenance and routing problems with deep reinforcement learning.

Fig. 3 shows a schematic overview of an assignment between vehicles and vehicular tasks. This may be the aim of at least some embodiments - to determine an assignment 330 between vehicles 310 and requests (vehicular tasks) 320. In some systems, more "conventional" assignment algorithms may be used, such as a simplex method, primal-dual LP (Linear Programming)/QP (Quadratic Programming), a barrier method LP, QP and QCP (Quadratically Constrained Programming), MIP (Mixed integer Programming): Branch & Cut, Dynamic Search, a Hungarian-Munkres Algorithm, Nearest Neighbor, or a Jonker Volgenant Algorithm. These algorithms focus on finding an optimum solution for the assignment. In embodiments, the best assignment sequence may be determined as a linear program.

With the emergence of new Machine Learning (ML) techniques, new means are applied for related discrete optimization problems. For examples, Neural Network (NN) based approaches have been applied to a diverse set of optimization problems, e.g. on small combinatorial optimization problems, with interesting properties in terms of scalability. Pointer Networks (Ptr-Nets) have shown promising results regarding simple Vehicle Routing Problems (VRPs). Embodiments of the present disclosure provide an approach to predict beneficial vehicle routes to customers (i.e. one of a multitude of possible vehicular tasks) while predicting beneficial routes to charging stations (another possible vehicular task) depending on the vehicle fuel state. At least some embodiments may provide close to optimal combinatorial assignments in efficient and scalable manner. Depending on the fleet size, embodiments may considerably reduce traffic congestion, air pollution while increasing the fleet efficiency and service quality for customers.

In embodiments, reinforcement learning may be used to perform the assignment. Fig. 4 shows a schematic flow chart of a reinforcement Q (Quality)-learning approach. At reference sign 410, R and Q are initialized, where Q is a matrix that defines the states and actions, and R is the reward function. At 420, the current state is observed. At 430, a random or greedy action is selected from Q. At 440, the action of Q is performed. At 450, the reward is calculated according to R, at 460, the Q-matrix is updated, and the approach returns to reference sign 420 and observes the current state.

In the following, an approach based on policy gradients is introduced, thereby using a training, validation and test set to train and evaluate the generalization and scalability capabilities of the proposed neural network approach, i.e. the solution quality and efficiency by a set of sample problems. This may be embodiments of the methods, systems and computer programs introduced in connection with Figs. 1a to 2c. Aspects of the presented approach may be applied, in a more general manner, to the methods, systems and computer programs introduced in connection with Figs. 1a to 2c.

In the following, a plurality of vehicles and a plurality of vehicular tasks are used to model using a bipartite Request-Vehicle Graph, wherein requests are requests for a vehicular task. In order to formulate the multi-vehicle matching problem, a set of graphs $G(V, E)$ containing instances of random asymmetric bipartite graphs with a set of nodes $N = V \cup R \cup C$ containing a set of vehicle nodes $V = \{v_1,..., v_i\}$ (e.g. the plurality of vehicles), a set of request nodes $R = \{r_1,...,r_j\}$ (e.g. the plurality of vehicular tasks) and a set of charge station $C = \{c_1,...,c_k\}$ nodes (i.e. charging stations) is introduced. The set of edges E may be defined by the negative Euclidean norm and range value with equations (2, 7). Here, in some embodiments, the objective may be to find the maximum cardinality matching which contains the largest quantity of edges E that globally maximizes the range of vehicles and minimizes the selected covered distances among vehicles (a possible objective function). Finding the maximum cardinality matching is understood to be a special case of the maximum flow problem, and can be as well formulated in an Integer Linear Program (ILP) formulation as follows. By reducing or minimizing the objective function

$$C(Y|X) = \min \sum_{i=0}^{p-1} \sum_{d=0}^{v-1} [d_{i,j} - r_i] \cdot x_{i,j} \ (1)$$

$$R(Y|X) = -C(Y|X) = max \sum_{i=0}^{p-1} \sum_{d=0}^{v-1} [-d_{i,j} + r_i] \cdot x_{i,j} \ (2)$$

with $p \in V$ and $d \in \{R, C\}$ as pickup and dropoff locations subject to the following constraints,

$$x_{i,j} \in \{0,1\}, d_{i,j} \in [0,\dots,1], r_i \in [0,\dots,1] (3)$$

$$\sum_{i=0}^{n-1} x_{i,j} \leq 1 , \sum_{j=0}^{m-1} x_{i,j} \leq 1 , \sum_{k=0}^{c-1} x_{i,j} \leq 1 \ (4)$$

$$\sum_{i=0}^{p-1} \sum_{d=0}^{v-1} [-d_{i,j} + r_i] \cdot x_{i,j} \geq 0.2 \cdot \max r_i \ (5)$$

$$\sum_{i=0}^{r-1} \sum_{j=0}^{v-1} x_{i,j} = \min[|V|, |R + C|] \ (6)$$

the solution may contain the largest set possible of least costly edges. Note, that the constraints in equation (3) limit the range of values, where x is the decision matrix determining the graph adjacency. Furthermore, the values of $d_{i,j,k}$ and $r_i$ are the negative Euclidean distances from sampled coordinates within a unit square and the individual range limits of the individual vehicle nodes. Both variables are normalized and hence limited between 0 and 1. The next constraints in (4) limit the number of adjacent nodes to 1 for each vehicle, request and charge station. In other words, a vehicle might be only assigned to (only one of) a request or charging station at the same time. The next bound in equation (5) ensures that vehicles are only assigned to feasible routes while targeting a goal fuel state of 20 % of the individual maximum range capacity after one request assignment.

In the following, a Neural Network Encoding of the embodiment is shown. Again, aspects of the encoding or the neural network, or of the neural network itself, may be applied, in a more general manner, to the methods, systems and computer programs introduced in connection with Figs. 1a to 2c. In this section, the focus is on the neural network encoding, that takes asymmetric bipartite graphs features as input, and represents a sequence of $N = v \cdot (r + c)$ assignments among $v$ vehicle r request and c charging station nodes in two dimensional space $S = \{q_i\}_{i=1}^{N}$ where each coordinate $q_i \in \mathbb{R}^2$. Hereby, a permutation of the points q may be searched for, termed matching sequence $Y$, as set of routes or highest rewarding edges, that assigns a route to each vehicle once and has the maximum difference between distances driven and the current fleet fuel state. In other words, a set of routes that minimizes the distances driven to customers while maximizing the fuel state for each route over the vehicle fleet may be searched, which automatically assigns empty vehicles to charging stations. In this embodiment, the reward of an assignment tour that equals the reward of the output assignment sequence $Y = \{\pi_1,\dots, \pi_v\}$ may be defined by equation (2). Here,

$$d_{i,j} = \sum_{i=0}^{n-1} \left\| q_{\pi(i,j,k)} - q_{\pi(i+1,j+1,k+1)} \right\|_2 \ (7)$$

represents the distance between vehicle and request coordinates, where $\|\cdot\|_2$ denotes $\ell_2$ norm. The goal is to learn the parameters of a stochastic policy $p(Y|X)$ that assigns high probabilities to routes, while minimizing the distances and maximizing the current fuel state of the vehicle fleet by learning from X sample sequences.

In the following, the architecture of the neural network according to an embodiment is shown. Fig. 5 shows a block diagram of an embodiment of a machine-learning model, the machine-learning model having a Pointer Network Architecture. The machine-learning model, or neural network, comprises an input layer 510, an embedding layer 520, an attention layer 530, which is masked 535 based on the input layer, a pointer network layer 540, a decoding layer (LSTM) 550 and an output layer 560.

In order to generalize for specified graph sizes, the approach of O. Vinyals, M. Fortunato, and N. Jaitly, "Pointer networks" in Advances in Neural Information Processing Systems, 2015, pp. 2692-2700 [1] was followed, which uses a set of softmax modules as attention mechanism. Since the input features are not sequentially dependent, the approach of replacing the Recurrent Neural Network (RNN) encoder with a Pointer Network (Ptr-Net) using an embedding layer for mapping the input features to a D-dimensional vector space was followed. The NN architecture was changed to generalize for multiple vehicles, customer requests, and charge stations. Generally, the input features may comprise or consist of the node sets that have been introduced above. The node sets may be permuted among themselves to represent every combination possible in an asymmetric bipartite graph structure. Subsequently, using the embedding layer, the input is mapped to higher dimensional space. The NN output may return the decoded index sequence that points to specific inputs. Here, the output sequence may represent the assignments made for all vehicles to customers and charge stations. The output sequence may be be related to the input sequence using the chain rule and the introduction of the probabilistic representation to factorize the probability of a specific matching sequence as

$$p(Y = y_0, \dots, y_N | X = x_0, \dots, x_N) \, (8)$$

$$= \prod_{i=1}^{N} p(y_{n+1} | X_N, y_0, \dots, y_N), \, (9)$$

where the right hand side is computed using the presented attention mechanism in [1]. The difference to the network architecture in [1], I. Bello, H. Pham, Q. V. Le, M. Norouzi, and S. Bengio, "Neural combinatorial optimization with reinforcement learning" arXiv preprint arXiv:1611.09940, 2016 [2], is the input permutation layer in Fig. 5, reference sign 510, where all potential assignment combinations of vehicles, requests and charging stations are computed for each graph problem sample. In presence of asymmetric graph instances, dummy assignments and a mask function may be used to prevent the network from selecting infeasible assignments.

Input Features: Every input cell may comprise or be composed of seven static features, such as containing the indices of vehicles, requests, charging stations, the quantity of graph nodes, the resulting bipartite edges weighted by negative euclidean distances and positive individual arbitrary vehicle fuel states as upper range bound of the possible coverable distance. Since the matching sequence represents a pairwise matching, dynamic features might not be used, contrary to the approach presented in [2]. Since the coordinates $s = \{q_i\}_{i=1}^{N}$ and vehicle fuel ranges are chosen to range randomly between [0,1], an assignment exceeding the vehicle range may occur.

Embedding Layer 520: The embedding layer 520 may map an input sequence *s* from the input layer 510 in a sequence of integers named embeddings. Each integer may further represent an available match option depending on the length of the matching sequence Y.

Attention Layer 530: An attention model can pick out the most important assignments or matches even for large and complex graph problems. Hereby, the attention mechanism learns a graph summary of the most important graph problem assignments. Similar to [1], M. Nazari, A. Oroojlooy, L. Snyder, and M. Takác, "Reinforcement learning for solving the vehicle routing problem," in Advances in Neural Information Processing Systems, 2018, pp. 9839-9849 [3], W. Kool, H. van Hoof, and M. Welling, "Attention, learn to solve routing problems!" arXiv preprint arXiv:1803.08475, 2018 [4], the attention layer was used as context-sensitive structure that extracts relevant information from the input layer. The input data relevance hereby may be decided via an alignment vector that at per decoding step t which is computed from the embedded inputs $e_t^i = (s^i, x_s^i, x_d^i)$ for each embedded input *i*, memory state cell $h_t \in \mathbb{R}^D$ and decoding step t. The alignment vector $a_t$ may be computed as

$$a_t = a_t(x_t, h_t) = softmax(v_a^T \tanh(W_a[x_t^i \sqcup h_t])) \, (10)$$

where $\sqcup$ is the concatenation of vectors $x_t^i$ and $h_t$. The conditional probabilities may be further computed by $p_{ct} = \sum_{i=1}^{N} a_t^i x_t^i$ via the embedded inputs. Subsequently, the conditional probabilities may be normalized via the softmax function

$$\pi(\cdot \,|X_t,Y_t) = softmax(v_c^T \tanh(W_a[x_t^i \sqcup h_t])) \quad (11)$$

where $W_a$, $W_c$ are trained weight matrices and $v_a$, $v_c$ trained weight vectors.

Mask Function 535: The mask function may trace existing conflicting matches. The function may be used to ensure that infeasible matching probabilities are set to zero, which prevents the decoder from selecting any masked matches. This may also ensure that double assignments are prevented.

Critic Module Architecture: The critic module may contain three basic neural network modules. Initially, two layers of Long-Term Short-Term Memory (LSTM) modules may be used for static or dynamic encoding and processing, secondly, three layers of one-dimensional convolutional modules and a two layered rectangular unit ReLU (Rectified Linear Unit) decoder may be used. Further, the critic's task is to return a predictive estimate from an input policy sequence c(s). The critic function may be used to evaluate the assignments.

Policy Gradient Optimization: [2] proposes to train the pointer network using a Reinforcement Learning (RL)based approach, providing a simple reward mechanism for combinatorial optimization without the need to get expensive supervised-labeled data from linear programming solvers. This approach was followed using model-free policy-based Reinforcement Learning to improve the pointer network's parameters $\Theta$. The training objective may be the expected sum of equation (1), which scores the sampled matching sequence cardinality $A_C$ during the training phase. During training, the improvement or optimization may involve a sampling of graphs from the distribution of training graphs S. Hereby, the objective may be to enlarge or maximize the expected reward denoted by $R(\theta|s) = E_{\pi \sim p\theta(\cdot|S)} A_C(\pi|S)$. Finally, policy gradient methods and ADAM/Adadelta stochastic gradient descent M. D. Zeiler, "Adadelta: an adaptive learning rate method," arXiv preprint arXiv:1212.5701, 2012 [5] may be used to optimize the pointer network parameters. The gradient may be furthermore denoted by the REINFORCE algorithm or R. J. Williams, "Simple statistical gradient-following algorithms for connectionist reinforcement learning," Machine learning, vol. 8, no. 3-4, pp. 229-256, 1992 [6] via

$$\nabla_\theta A_C(\theta|s) = E_{\pi \sim p_\theta(\cdot|S)}\big[\big(A_C(\pi|S) - C_E(S)\big)\nabla_\theta \log p_\theta(\pi|S)\big] \quad (12)$$

The following algorithm shows the Actor-Critic Training Procedure:

1 Process *Training set S, number of epochs E, training steps T , batch size B*

2 Initialize *Pointer Network Params $\theta$, Critic Network Params $\theta_C$*

3 **for** each epoch e **do**

4      **for** each train step $t \in T$ **do**

5          **Sample** *ptr net input sample s from S for $i \in \{1,\dots,B\}$*

6          **Sample** *matching squence $\pi_i$ from $p_\theta(\cdot \,|si)$ for $i \in \{1,\dots,B\}$*

7          **Update** $A_C \leftarrow A_C(s_i)$

8          **Update** $c_i \leftarrow c_{\theta C}(s_i)$ *for $i \in \{1,\dots,B\}$*

9          **Update** $L_{A_C,\theta} \leftarrow \frac{1}{B}\sum_{i=1}^{B}\big(A_C(\pi|S) - C_E(S)\big)\nabla_\theta \log p_\theta(\pi|S)$ *for $i \in \{1,\dots,B\}$*

10          **Update** $L_C \leftarrow \frac{1}{B}\sum_{i=1}^{B}\|A_C(\pi_i) - c_i\|_2^2$

11          **Update** $\theta \leftarrow ADAM(\theta, a_\theta)$

12          **Update** $\theta_C \leftarrow ADAM(\theta_C, \nabla_C, a_\theta, L_A)$

13      **end for**

14      **Return** $\theta$

15 **end** training

The algorithm may be used to implement the training 220 set out in relation to reference signs 222 to 228 of Fig. 2b. The algorithm formally samples a quantity of B sample graphs $s_1, ..., s_B \sim S$ and by sampling a single matching sequence per graph, i.e. $\pi_i \sim p_\theta(\cdot \,|s_i)$, the gradient in equation (12) is approximated with Monte Carlo sampling in Algorithm 1 line 9. Hereby, the baseline $c(s)$ is an exponential moving average of the rewards obtained by the network's policy output over the training process. This is called the critic network with the critic parameters $\theta_C$, which serves as auxiliary network by returning an estimate of the expected reward for every sampled batch. The critic network may reduce the variance of occurring gradients during the training process and is trained with stochastic gradient descent on a mean absolute error objective between the actual reward and the prediction estimate $\theta_C$. This is slightly different to [2], but has qualitative advantages in an experimental evaluation. The objective is formulated in Algorithm line 8.

In Fig. 6, a corresponding schematic diagram of actions performed by the algorithm in a pointer network architecture is shown. In Fig. 6, the numbering corresponds to the line numbers of the above algorithm. In line number 1, input data sets Tr (training data set), Va (validation data set) and Te (test data set) are processed by a tensor function. Additionally, the number of epochs E, training steps T and the batch size B are processed. In line 2, the parameters of the pointer network $\theta$ and of the critic network $\theta_C$ are initialized (such as a size of the network, number of layers, dropout and overclipping parameters etc.) In line 3, the outer *for each* loop begins *(for each epoch)*. In line 4, the inner *for each* loop begins *(for each training step $t \in T$)*. In line 5, the training set of a batch is sampled for each sample of the batch. In line 6, the matching sequence is sampled and input into the forward path (masked). In line 7, the actor reward is updated. In line 8, the critic reward is updated. In line 9, the advantage function is updated. In line 10, the loss is backpropagated. In line 11, validation is performed and the parameters of the pointer network $\theta$ are updated using the ADAM function (or ADADELTA - ADAGRAD is a stateless version of ADAM). In line 12, the parameters of the critic network $\theta_C$ are updated using the ADAM function (or ADADELTA). In line 13, the inner for loop is terminated, returning to line 4. After all of the batches of the epoch are completed, in line 14, the pointer network parameters are returned, and the algorithm continues with the next epoch at line 4.

More details and aspects of the concept are mentioned in connection with the proposed concept or one or more examples described above or below (e.g. Fig. 1a to 2c). The concept may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A method for assigning a plurality of vehicles to a plurality of vehicular tasks, the method comprising:

   Obtaining (110) information on the plurality of vehicular tasks;
   Obtaining (120) information on the plurality of vehicles;
   Providing (130) the information on the plurality of vehicular tasks and the information on the plurality of vehicles as input to a machine-learning model, wherein the machine-learning model is suitable for evaluating a plurality of assignments between the plurality of vehicles and the plurality of vehicular tasks,
   wherein an output of the machine-learning model indicates a favorability of the plurality of assignments between the plurality of vehicles and the plurality of vehicular tasks,
   wherein the machine-learning model is trained the aim of improving a result of an objective function, wherein the objective function is suitable for evaluating a favorability of a plurality of assignments between the plurality of vehicles and the plurality of vehicular tasks,
   and
   Assigning (140) the plurality of vehicles to the plurality of vehicular tasks based on the output of the machine-learning model,
   wherein the information on the plurality of vehicular tasks and the information on the plurality of vehicles is provided (130) as a bipartite graph to the machine-learning model, the graph comprising the plurality of vehicular tasks, and the plurality of vehicles as nodes and a plurality of potential assignments between vehicles and vehicular tasks as edges of the graph, wherein the output of the machine-learning model indicates the favorability of the plurality of assignments using the edges of the graph,
   wherein the objective function is to find the maximum cardinality matching which contains the largest quantity of edges that globally maximizes the range of vehicles and minimizes the selected covered distances among vehicles.

2. The method according to claim 1, wherein the plurality of vehicular tasks comprises at least one of a plurality of transportation tasks, a plurality of vehicular charging tasks, a plurality of vehicular maintenance tasks and a plurality of vehicular relocation tasks.

3. The method according to one of the claims 1 or 2, wherein assigning (140) the plurality of vehicles to the plurality of vehicular tasks comprises selecting (145) at least a subset of the plurality of assignments based on a selection criterion, the selection criterion being based on the favorability of the respective assignment.

4. The method according to one of the claims 1 to 3, wherein the information on the plurality of vehicular tasks comprises for each vehicular task at least one of information on a starting position of the vehicular task, information on a destination position of the vehicular task and information on a time and/or duration of the vehicular task, and/or wherein the information on the plurality of vehicles comprises for each vehicle at least one of information on a current position of the vehicle, information on an availability of the vehicle, information on a destination position of the vehicle, and information on a charging status of the vehicle.

5. The method according to one of the claims 1 to 4, wherein the machine-learning model is trained using the method of one of the claims 6 to 10.

6. A method for providing a machine-learning model, the method comprising:

Obtaining (210) training input data for training the machine-learning model, the training input data comprising training information on a plurality of vehicular tasks and training information on a plurality of vehicles;
Training (220) the machine-learning model to assign the plurality of vehicles to the plurality of vehicular tasks using the training input data, wherein the training is performed with the aim of improving a result of an objective function, wherein the objective function is suitable for evaluating a favorability of a plurality of assignments between the plurality of vehicles and the plurality of vehicular tasks, wherein the information on the plurality of vehicular tasks and the information on the plurality of vehicles is provided (130) as a bipartite graph to the machine-learning model, the graph comprising the plurality of vehicular tasks, and the plurality of vehicles as nodes and a plurality of potential assignments between vehicles and vehicular tasks as edges of the graph, wherein the output of the machine-learning model indicates the favorability of the plurality of assignments using the edges of the graph, wherein the objective function is to find the maximum cardinality matching which contains the largest quantity of edges that globally maximizes the range of vehicles and minimizes the selected covered distances among vehicles,
; and
Providing (230) the machine-learning model.

7. The method according to claim 6, wherein an output of the machine-learning model indicates a favorability of the plurality of assignments between the plurality of vehicles and the plurality of vehicular tasks, and/or wherein the machine-learning model is trained (220) using reinforcement learning, wherein a reward function of the reinforcement learning is based on the objective function.

8. The method according to one of the claims 6 or 7, wherein the machine-learning model is trained (220) by repeatedly:

a) inputting (222) the training input data into the machine-learning model,
b) assigning (224) the plurality of vehicles to the plurality of vehicular tasks based on an output of the machine-learning model,
c) evaluating (226) the assignment between the plurality of vehicles and the plurality of vehicular tasks using the objective function, and
d) adjusting (228) the machine-learning model based on a result of the evaluation.

9. The method according to claim 8, wherein the method comprises subdividing (215) the training input data into a plurality of batches of training input data, wherein each batch of the plurality of batches is input to the machine-learning model separately, wherein the assignment of the plurality of vehicles to the plurality of vehicular tasks is performed separately for each batch, and wherein the evaluation of the assignment is performed separately for each batch.

10. The method according to one of the claims 6 to 9, wherein the objective function is based on at least one of a mean waiting time of the plurality of vehicular tasks, a maximal waiting time of the plurality of vehicular tasks, a time window of a vehicular task, a personalized feature that is based on feedback from a user, a demand prediction for at least a subset of the plurality of vehicular tasks, a predictive maintenance of the plurality of vehicles, an amount of available vehicles or vehicle resources, a number of unoccupied seats of the plurality of vehicles, an amount of unused or used capacity of the plurality of vehicles, and an amount of unused or used capacity of one or more charging or maintenance stations.

11. A computer program having a program code for performing at least one of the methods of one of the previous claims, when the computer program is executed on a computer, a processor, or a programmable hardware component.

**12.** A system (100) comprising one or more processing modules (14) and one or more storage modules (16), wherein the system is suitable for assigning a plurality of vehicles to a plurality of vehicular tasks, wherein the system is configured to:

Obtain information on the plurality of vehicular tasks,
Obtain information on the plurality of vehicles,
Provide the information on the plurality of vehicular tasks and the information on the plurality of vehicles as input to a machine-learning model, wherein the machine-learning model is suitable for evaluating a plurality of assignments between the plurality of vehicles and the plurality of vehicular tasks,
wherein an output of the machine-learning model indicates a favorability of the plurality of assignments between the plurality of vehicles and the plurality of vehicular tasks,
wherein the machine-learning model is trained with the aim of improving a result of an objective function, wherein the objective function is suitable for evaluating a favorability of a plurality of assignments between the plurality of vehicles and the plurality of vehicular tasks,
wherein the information on the plurality of vehicular tasks and the information on the plurality of vehicles is provided (130) as a bipartite graph to the machine-learning model, the graph comprising the plurality of vehicular tasks, and the plurality of vehicles as nodes and a plurality of potential assignments between vehicles and vehicular tasks as edges of the graph, wherein the output of the machine-learning model indicates the favorability of the plurality of assignments using the edges of the graph,
wherein the objective function is to find the maximum cardinality matching which contains the largest quantity of edges that globally maximizes the range of vehicles and minimizes the selected covered distances among vehicles, and
Assign the plurality of vehicles to the plurality of vehicular tasks based on the output of the machine-learning model.

**13.** A system (200) comprising one or more processing modules (24) and one or more storage modules (26), wherein the system is suitable for providing a machine-learning model, wherein the system is configured to:

Obtain training input data for training the machine-learning model, the training input data comprising training information on a plurality of vehicular tasks and training information on a plurality of vehicles,
Train the machine-learning model to assign the plurality of vehicles to the plurality of vehicular tasks using the training input data, wherein the training is performed with the aim of improving a result of an objective function, wherein the objective function is suitable for evaluating a favorability of a plurality of assignments between the plurality of vehicles and the plurality of vehicular tasks,
wherein the information on the plurality of vehicular tasks and the information on the plurality of vehicles is provided (130) as a bipartite graph to the machine-learning model, the graph comprising the plurality of vehicular tasks, and the plurality of vehicles as nodes and a plurality of potential assignments between vehicles and vehicular tasks as edges of the graph, wherein the output of the machine-learning model indicates the favorability of the plurality of assignments using the edges of the graph,
wherein the objective function is to find the maximum cardinality matching which contains the largest quantity of edges that globally maximizes the range of vehicles and minimizes the selected covered distances among vehicles, and
Provide the machine-learning model.

**Patentansprüche**

**1.** Verfahren zur Zuweisung einer Mehrzahl von Fahrzeugen zu einer Mehrzahl von Fahrzeugaufgaben, wobei das Verfahren umfasst:

Erhalten (110) von Informationen über die Mehrzahl von Fahrzeugaufgaben;
Erhalten (120) von Informationen über die Mehrzahl von Fahrzeugen;
Bereitstellen (130) der Informationen über die Mehrzahl von Fahrzeugaufgaben und der Informationen über die Mehrzahl von Fahrzeugen als Eingabe in ein Modell für maschinelles Lernen, wobei das Modell für maschinelles Lernen zum Bewerten einer Mehrzahl von Zuweisungen zwischen der Mehrzahl von Fahrzeugen und der Mehrzahl von Fahrzeugaufgaben geeignet ist,
wobei eine Ausgabe des Modells für maschinelles Lernen eine Favorisierung der Mehrzahl von Zuweisungen zwischen der Mehrzahl von Fahrzeugen und der Mehrzahl von Fahrzeugaufgaben angibt,

wobei das Modell für maschinelles Lernen mit dem Ziel trainiert wird, das Ergebnis einer Zielfunktion zu verbessern, wobei die Zielfunktion zum Bewerten einer Favorisierung einer Mehrzahl von Zuweisungen zwischen der Mehrzahl von Fahrzeugen und der Mehrzahl von Fahrzeugaufgaben geeignet ist, und

Zuweisen (140) der Mehrzahl von Fahrzeugen zur Mehrzahl von Fahrzeugaufgaben basierend auf der Ausgabe des Modells für maschinelles Lernen,

wobei die Informationen über die Mehrzahl von Fahrzeugaufgaben und die Informationen über die Mehrzahl von Fahrzeugen als bipartiter Graph für das Modell für maschinelles Lernen bereitgestellt werden (130), wobei der Graph die Mehrzahl von Fahrzeugaufgaben und die Mehrzahl von Fahrzeugen als Knoten und eine Mehrzahl von potenziellen Zuweisungen zwischen Fahrzeugen und Fahrzeugaufgaben als Kanten des Graphen umfasst, wobei die Ausgabe des Modells für maschinelles Lernen die Favorisierung der Mehrzahl von Zuweisungen unter Verwendung der Kanten des Graphen angibt,

wobei die Zielfunktion darin besteht, die Übereinstimmung maximaler Kardinalität zu ermitteln, die die größte Menge von Kanten enthält, die die Reichweite von Fahrzeugen global maximiert und die ausgewählten zurückgelegten Distanzen zwischen Fahrzeugen minimiert.

2. Verfahren nach Anspruch 1, wobei die Mehrzahl von Fahrzeugaufgaben mindestens eine von einer Mehrzahl von Transportaufgaben, einer Mehrzahl Fahrzeugladeaufgaben, einer Mehrzahl von Fahrzeugwartungsaufgaben und einer Mehrzahl von Fahrzeugstandortwechselaufgaben umfasst.

3. Verfahren nach einem der Ansprüche 1 oder 2, wobei das Zuweisen (140) der Mehrzahl von Fahrzeugen zur Mehrzahl von Fahrzeugaufgaben ein Auswählen (145) mindestens einer Teilmenge der Zuweisungen basierend auf einem Auswahlkriterium umfasst, wobei das Auswahlkriterium auf der Favorisierung der jeweiligen Zuweisung basiert.

4. Verfahren nach einem der Ansprüche 1 bis 3, wobei die Informationen über die Mehrzahl von Fahrzeugaufgaben für jede Fahrzeugaufgabe mindestens eines von Informationen über eine Startposition der Fahrzeugaufgabe, Informationen über eine Zielposition der Fahrzeugaufgabe und Informationen über eine Zeit und/oder eine Dauer der Fahrzeugaufgabe umfassen,

und/oder wobei die Informationen über die Mehrzahl von Fahrzeugen für jedes Fahrzeug mindestens eines von Informationen über eine aktuelle Position des Fahrzeugs, Informationen über eine Verfügbarkeit des Fahrzeugs, Informationen über eine Zielposition des Fahrzeugs und Informationen über einen Ladestatus des Fahrzeugs umfassen.

5. Verfahren nach einem der Ansprüche 1 bis 4, wobei das Modell für maschinelles Lernen unter Verwendung des Verfahrens nach einem der Ansprüche 6 bis 10 trainiert wird.

6. Verfahren zur Bereitstellung eines Modells für maschinelles Lernen, wobei das Verfahren umfasst:

Erhalten (210) von Trainingseingabedaten zum Trainieren des Modells für maschinelles Lernen, wobei die Trainingseingabedaten Trainingsinformationen über eine Mehrzahl von Fahrzeugaufgaben und Trainingsinformationen über eine Mehrzahl von Fahrzeugen umfassen;

Trainieren (220) des Modells für maschinelles Lernen, um die Mehrzahl von Fahrzeugen unter Verwendung der Trainingseingabedaten der Mehrzahl von Fahrzeugaufgaben zuzuweisen, wobei das Training mit dem Ziel durchgeführt wird, ein Ergebnis einer Zielfunktion zu verbessern,

wobei die Zielfunktion zum Bewerten einer Favorisierung einer Mehrzahl von Zuweisungen zwischen der Mehrzahl von Fahrzeugen und der Mehrzahl von Fahrzeugaufgaben geeignet ist,

wobei die Informationen über die Mehrzahl von Fahrzeugaufgaben und die Informationen über die Mehrzahl von Fahrzeugen als bipartiter Graph für das Modell für maschinelles Lernen bereitgestellt werden (130), wobei der Graph die Mehrzahl von Fahrzeugaufgaben und die Mehrzahl von Fahrzeugen als Knoten und eine Mehrzahl von potenziellen Zuweisungen zwischen Fahrzeugen und Fahrzeugaufgaben als Kanten des Graphen umfasst, wobei die Ausgabe des Modells für maschinelles Lernen die Favorisierung der Mehrzahl von Zuweisungen unter Verwendung der Kanten des Graphen angibt,

wobei die Zielfunktion darin besteht, die Übereinstimmung maximaler Kardinalität zu ermitteln, die die größte Menge von Kanten enthält, die die Reichweite von Fahrzeugen global maximiert und die ausgewählten zurückgelegten Distanzen zwischen Fahrzeugen minimiert, und

Bereitstellen (230) des Modells für maschinelles Lernen.

7. Verfahren nach Anspruch 6, wobei eine Ausgabe des Modells für maschinelles Lernen eine Favorisierung der Mehrzahl von Zuordnungen zwischen der Mehrzahl von Fahrzeugen und der Mehrzahl von Fahrzeugaufgaben angibt, und/oder wobei das Modell für maschinelles Lernen unter Verwendung von verstärkendem Lernen trainiert wird (220), wobei eine Belohnungsfunktion des verstärkenden Lernens auf der Zielfunktion basiert.

8. Verfahren nach einem der Ansprüche 6 oder 7, wobei das Modell für maschinelles Lernen trainiert wird (220) durch wiederholtes:

   a) Eingeben (222) der Trainingseingabedaten in das Modell für maschinelles Lernen,
   b) Zuweisen (224) der Mehrzahl von Fahrzeugen zur Mehrzahl von Fahrzeugaufgaben basierend auf einer Ausgabe des Modells für maschinelles Lernen,
   c) Bewerten (226) der Zuweisung zwischen der Mehrzahl von Fahrzeugen und der Mehrzahl von Fahrzeugaufgaben unter Verwendung der Zielfunktion, und
   d) Anpassen (228) des Modells für maschinelles Lernen basierend auf einem Ergebnis der Bewertung.

9. Verfahren nach Anspruch 8, wobei das Verfahren ein Unterteilen (215) der Trainingseingabedaten in eine Mehrzahl von Stapeln von Trainingseingabedaten umfasst, wobei jeder Stapel der Mehrzahl von Stapeln separat in das Modell für maschinelles Lernen eingegeben wird, wobei die Zuweisung der Mehrzahl von Fahrzeugen zur Mehrzahl von Fahrzeugaufgaben für jeden Stapel separat durchgeführt wird und wobei die Bewertung der Zuweisung für jeden Stapel separat durchgeführt wird.

10. Verfahren nach einem der Ansprüche 6 bis 9, wobei die Zielfunktion auf mindestens einem von einer mittleren Wartezeit der Mehrzahl von Fahrzeugaufgaben, einer maximalen Wartezeit der Mehrzahl von Fahrzeugaufgaben, einem Zeitfenster einer Fahrzeugaufgabe, einem personalisierten Merkmal, das auf einer Rückmeldung von einem Benutzer basiert, einer Bedarfsvorhersage für mindestens eine Teilmenge der Mehrzahl von Fahrzeugaufgaben, einer vorausschauenden Wartung der Mehrzahl von Fahrzeugen, einer Menge verfügbarer Fahrzeuge oder Fahrzeugressourcen, einer Anzahl unbesetzter Sitze der Mehrzahl von Fahrzeugen, einer Menge ungenutzter oder genutzter Kapazität der Mehrzahl von Fahrzeugen und einer Menge ungenutzter oder genutzter Kapazität einer oder mehrerer Lade- oder Wartungsstationen basiert.

11. Computerprogramm mit einem Programmcode zum Durchführen mindestens eines der Verfahren nach einem der vorhergehenden Ansprüche, wenn das Computerprogramm in einem Computer, einem Prozessor oder einer programmierbaren Hardware-Komponente ausgeführt wird.

12. System (100), umfassend ein oder mehrere Verarbeitungsmodule (14) und ein oder mehrere Speichermodule (16), wobei das System zum Zuweisen einer Mehrzahl von Fahrzeugen zu einer Mehrzahl von Fahrzeugaufgaben geeignet ist, wobei das System konfiguriert ist zum:

   Erhalten von Informationen über die Mehrzahl von Fahrzeugaufgaben;
   Erhalten von Informationen über die Mehrzahl von Fahrzeugen;
   Bereitstellen der Informationen über die Mehrzahl von Fahrzeugaufgaben und der Informationen über die Mehrzahl von Fahrzeugen als Eingabe in ein Modell für maschinelles Lernen, wobei das Modell für maschinelles Lernen zum Bewerten einer Mehrzahl von Zuweisungen zwischen der Mehrzahl von Fahrzeugen und der Mehrzahl von Fahrzeugaufgaben geeignet ist,
   wobei eine Ausgabe des Modells für maschinelles Lernen eine Favorisierung der Mehrzahl von Zuweisungen zwischen der Mehrzahl von Fahrzeugen und der Mehrzahl von Fahrzeugaufgaben angibt,
   wobei das Modell für maschinelles Lernen mit dem Ziel trainiert wird, das Ergebnis einer Zielfunktion zu verbessern, wobei die Zielfunktion zum Bewerten einer Favorisierung einer Mehrzahl von Zuweisungen zwischen der Mehrzahl von Fahrzeugen und der Mehrzahl von Fahrzeugaufgaben geeignet ist,
   wobei die Informationen über die Mehrzahl von Fahrzeugaufgaben und die Informationen über die Mehrzahl von Fahrzeugen als bipartiter Graph für das Modell für maschinelles Lernen bereitgestellt werden (130), wobei der Graph die Mehrzahl von Fahrzeugaufgaben und die Mehrzahl von Fahrzeugen als Knoten und eine Mehrzahl von potenziellen Zuweisungen zwischen Fahrzeugen und Fahrzeugaufgaben als Kanten des Graphen umfasst, wobei die Ausgabe des Modells für maschinelles Lernen die Favorisierung der Mehrzahl von Zuweisungen unter Verwendung der Kanten des Graphen angibt,
   wobei die Zielfunktion darin besteht, die Übereinstimmung maximaler Kardinalität zu ermitteln, die die größte Menge von Kanten enthält, die die Reichweite von Fahrzeugen global maximiert und die ausgewählten zurückgelegten Distanzen zwischen Fahrzeugen minimiert, und

Zuweisen der Mehrzahl von Fahrzeugen zur Mehrzahl von Fahrzeugaufgaben basierend auf der Ausgabe des Modells für maschinelles Lernen.

13. System (200), umfassend ein oder mehrere Verarbeitungsmodule (24) und ein oder mehrere Speichermodule (26), wobei das System zum Bereitstellen eines Modells für maschinelles Lernen geeignet ist, wobei das System konfiguriert ist zum:

Erhalten von Trainingseingabedaten zum Trainieren des Modells für maschinelles Lernen, wobei die Trainingseingabedaten Trainingsinformationen über eine Mehrzahl von Fahrzeugaufgaben und Trainingsinformationen über eine Mehrzahl von Fahrzeugen umfassen,

Trainieren des Modells für maschinelles Lernen, um die Mehrzahl von Fahrzeugen unter Verwendung der Trainingseingabedaten der Mehrzahl von Fahrzeugaufgaben zuzuweisen, wobei das Training mit dem Ziel durchgeführt wird, ein Ergebnis einer Zielfunktion zu verbessern,

wobei die Zielfunktion zum Bewerten einer Favorisierung einer Mehrzahl von Zuweisungen zwischen der Mehrzahl von Fahrzeugen und der Mehrzahl von Fahrzeugaufgaben geeignet ist,

wobei die Informationen über die Mehrzahl von Fahrzeugaufgaben und die Informationen über die Mehrzahl von Fahrzeugen als bipartiter Graph für das Modell für maschinelles Lernen bereitgestellt werden (130), wobei der Graph die Mehrzahl von Fahrzeugaufgaben und die Mehrzahl von Fahrzeugen als Knoten und eine Mehrzahl von potenziellen Zuweisungen zwischen Fahrzeugen und Fahrzeugaufgaben als Kanten des Graphen umfasst,

wobei die Ausgabe des Modells für maschinelles Lernen die Favorisierung der Mehrzahl von Zuweisungen unter Verwendung der Kanten des Graphen angibt, wobei die Zielfunktion darin besteht, die Übereinstimmung maximaler Kardinalität zu ermitteln, die die größte Menge von Kanten enthält, die die Reichweite von Fahrzeugen global maximiert und die ausgewählten zurückgelegten Distanzen zwischen Fahrzeugen minimiert, und

Bereitstellen des Modells für maschinelles Lernen.

## Revendications

1. Procédé d'affectation d'une pluralité de véhicules à une pluralité de tâches de véhicules, le procédé comprenant :

l'obtention (110) d'informations sur la pluralité de tâches de véhicules ;
l'obtention (120) d'informations sur la pluralité de véhicules ;
la fourniture (130) des informations sur la pluralité de tâches de véhicules et des informations sur la pluralité de véhicules en tant que données d'entrée à un modèle d'apprentissage automatique, le modèle d'apprentissage automatique étant adapté à l'évaluation d'une pluralité d'affectations entre la pluralité de véhicules et la pluralité de tâches de véhicules,
une sortie du modèle d'apprentissage automatique indiquant une favorabilité de la pluralité d'affectations entre la pluralité de véhicules et la pluralité de tâches de véhicules,
le modèle d'apprentissage automatique étant entraîné dans le but d'améliorer le résultat d'une fonction objective, la fonction objective étant adaptée à l'évaluation de la favorabilité d'une pluralité d'affectations entre la pluralité de véhicules et la pluralité de tâches de véhicules,
et
l'affectation (140) de la pluralité de véhicules à la pluralité de tâches de véhicules sur la base de la sortie du modèle d'apprentissage automatique,
les informations sur la pluralité de tâches de véhicules et les informations sur la pluralité de véhicules étant fournies (130) sous la forme d'un graphe bipartite au modèle d'apprentissage automatique, le graphe comprenant la pluralité de tâches de véhicules et la pluralité de véhicules en tant que nœuds et une pluralité d'affectations potentielles entre des véhicules et des tâches de véhicules en tant qu'arêtes du graphe, la sortie du modèle d'apprentissage automatique indiquant la favorabilité de la pluralité d'affectations à l'aide des arêtes du graphe, la fonction objective consistant à trouver la correspondance de cardinalité maximale qui contient la plus grande quantité d'arêtes qui maximise globalement la portée des véhicules et minimise les distances couvertes sélectionnées parmi des véhicules.

2. Procédé selon la revendication 1, la pluralité de tâches de véhicules comprenant au moins une parmi une pluralité de tâches de transport, une pluralité de tâches de recharge de véhicules, une pluralité de tâches d'entretien de véhicules et une pluralité de tâches de relocalisation de véhicules.

3. Procédé selon l'une des revendications 1 ou 2, l'affectation (140) de la pluralité de véhicules à la pluralité de tâches de véhicules comprenant la sélection (145) d'au moins un sous-ensemble de la pluralité d'affectations sur la base d'un critère de sélection, le critère de sélection étant basé sur la favorabilité de l'affectation respective.

4. Procédé selon l'une des revendications 1 à 3, les informations sur la pluralité de tâches de véhicules comprenant pour chaque tâche de véhicule au moins certaines des informations sur une position de départ de la tâche de véhicule, des informations sur une position de destination de la tâche de véhicule et des informations sur une heure et/ou une durée de la tâche de véhicule,
et/ou les informations sur la pluralité de véhicules comprenant, pour chaque véhicule, au moins certaines des informations sur une position actuelle du véhicule, des informations sur une disponibilité du véhicule, des informations sur une position de destination du véhicule et des informations sur un état de charge du véhicule.

5. Procédé selon l'une des revendications 1 à 4, le modèle d'apprentissage automatique étant entraîné à l'aide du procédé selon l'une des revendications 6 à 10.

6. Procédé pour fournir un modèle d'apprentissage automatique, le procédé comprenant :

l'obtention (210) de données d'entrée d'entraînement pour l'entraînement du modèle d'apprentissage automatique, les données d'entrée d'entraînement comprenant des informations d'entraînement sur une pluralité de tâches de véhicules et des informations d'entraînement sur une pluralité de véhicules ;
l'entraînement (220) du modèle d'apprentissage automatique pour affecter la pluralité de véhicules à la pluralité de tâches de véhicules à l'aide des données d'entrée d'entraînement, l'entraînement étant effectué dans le but d'améliorer le résultat d'une fonction objective, la fonction objective étant adaptée à l'évaluation de la favorabilité d'une pluralité d'affectations entre la pluralité de véhicules et la pluralité de tâches de véhicules,
les informations sur la pluralité de tâches de véhicules et les informations sur la pluralité de véhicules étant fournies (130) sous la forme d'un graphe bipartite au modèle d'apprentissage automatique, le graphe comprenant la pluralité de tâches de véhicules et la pluralité de véhicules en tant que noeuds et une pluralité d'affectations potentielles entre des véhicules et des tâches de véhicules en tant qu'arêtes du graphe, la sortie du modèle d'apprentissage automatique indiquant la favorabilité de la pluralité d'affectations à l'aide des arêtes du graphe, la fonction objective consistant à trouver la correspondance de cardinalité maximale qui contient la plus grande quantité d'arêtes qui maximise globalement la portée des véhicules et minimise les distances couvertes sélectionnées parmi des véhicules,
et
la fourniture (230) du modèle d'apprentissage automatique.

7. Procédé selon la revendication 6, une sortie du modèle d'apprentissage automatique indiquant une favorabilité de la pluralité d'affectations entre la pluralité de véhicules et la pluralité de tâches de véhicules,
et/ou le modèle d'apprentissage automatique étant entraîné (220) à l'aide de l'apprentissage par renforcement, une fonction de récompense de l'apprentissage par renforcement étant basée sur la fonction objective.

8. Procédé selon l'une des revendications 6 ou 7, le modèle d'apprentissage automatique étant entraîné (220) en répétant :

a) l'entrée (222) des données d'entrée d'entraînement dans le modèle d'apprentissage automatique,
b) l'affectation (224) de la pluralité de véhicules à la pluralité de tâches de véhicules sur la base d'une sortie du modèle d'apprentissage automatique,
c) l'évaluation (226) de l'affectation entre la pluralité de véhicules et la pluralité de tâches de véhicules à l'aide de la fonction objective, et
d) l'ajustement (228) du modèle d'apprentissage automatique sur la base d'un résultat de l'évaluation.

9. Procédé selon la revendication 8, le procédé comprenant la subdivision (215) des données d'entrée d'entraînement en une pluralité de lots de données d'entrée d'entraînement, chaque lot de la pluralité de lots étant entré dans le modèle d'apprentissage automatique séparément, l'affectation de la pluralité de véhicules à la pluralité de tâches de véhicules étant effectuée séparément pour chaque lot, et l'évaluation de l'affectation étant effectuée séparément pour chaque lot.

10. Procédé selon l'une des revendications 6 à 9, la fonction objective étant basée sur au moins un parmi un temps d'attente moyen de la pluralité de tâches de véhicules, un temps d'attente maximal de la pluralité de tâches de véhicules, une fenêtre temporelle d'une tâche de véhicule, une caractéristique personnalisée qui est basée sur le retour d'information d'un utilisateur, une prédiction de la demande pour au moins un sous-ensemble de la pluralité de tâches de véhicules, une maintenance prédictive de la pluralité de véhicules, une quantité de véhicules ou de ressources de véhicules disponibles, un nombre de sièges inoccupés de la pluralité de véhicules, une quantité de capacité inutilisée ou utilisée de la pluralité de véhicules, et une quantité de capacité inutilisée ou utilisée d'une ou de plusieurs stations de charge ou d'entretien.

11. Programme informatique comportant un code de programme pour la réalisation d'au moins un des procédés selon l'une des revendications précédentes, lorsque le programme informatique est exécuté sur un ordinateur, un processeur ou un composant matériel programmable.

12. Système (100) comprenant un ou plusieurs modules de traitement (14) et un ou plusieurs modules de stockage (16), le système étant adapté à l'affectation d'une pluralité de véhicules à une pluralité de tâches de véhicules, le système étant configuré pour :

   obtenir des informations sur la pluralité de tâches de véhicules,
   obtenir des informations sur la pluralité de véhicules, fournir les informations sur la pluralité de tâches de véhicules et les informations sur la pluralité de véhicules en tant que données d'entrée à un modèle d'apprentissage automatique, le modèle d'apprentissage automatique étant adapté à l'évaluation d'une pluralité d'affectations entre la pluralité de véhicules et la pluralité de tâches de véhicules,
   une sortie du modèle d'apprentissage automatique indiquant une favorabilité de la pluralité d'affectations entre la pluralité de véhicules et la pluralité de tâches de véhicules,
   le modèle d'apprentissage automatique étant entraîné dans le but d'améliorer le résultat d'une fonction objective, la fonction objective étant adaptée à l'évaluation d'une favorabilité d'une pluralité d'affectations entre la pluralité de véhicules et la pluralité de tâches de véhicules,
   les informations sur la pluralité de tâches de véhicules et les informations sur la pluralité de véhicules étant fournies (130) sous la forme d'un graphe bipartite au modèle d'apprentissage automatique, le graphe comprenant la pluralité de tâches de véhicules et la pluralité de véhicules en tant que noeuds et une pluralité d'affectations potentielles entre des véhicules et des tâches de véhicules en tant qu'arêtes du graphe, la sortie du modèle d'apprentissage automatique indiquant la favorabilité de la pluralité d'affectations à l'aide des arêtes du graphe,
   la fonction objective consistant à trouver la correspondance de cardinalité maximale qui contient la plus grande quantité d'arêtes qui maximise globalement la portée des véhicules et minimise les distances couvertes sélectionnées parmi des véhicules, et
   affecter la pluralité de véhicules à la pluralité de tâches de véhicules sur la base de la sortie du modèle d'apprentissage automatique.

13. Système (200) comprenant un ou plusieurs modules de traitement (24) et un ou plusieurs modules de stockage (26), le système étant adapté pour fournir un modèle d'apprentissage automatique, le système étant configuré pour :

   obtenir des données d'entrée d'entraînement pour entraîner le modèle d'apprentissage automatique, les données d'entrée d'entraînement comprenant des informations d'entraînement sur une pluralité de tâches de véhicules et des informations d'entraînement sur une pluralité de véhicules,
   entraîner le modèle d'apprentissage automatique pour affecter la pluralité de véhicules à la pluralité de tâches de véhicules à l'aide des données d'entrée d'entraînement, l'entraînement étant effectué dans le but d'améliorer un résultat d'une fonction objective, la fonction objective étant adaptée à l'évaluation d'une favorabilité d'une pluralité d'affectations entre la pluralité de véhicules et la pluralité de tâches de véhicules,
   les informations sur la pluralité de tâches de véhicules et les informations sur la pluralité de véhicules étant fournies (130) sous la forme d'un graphe bipartite au modèle d'apprentissage automatique, le graphe comprenant la pluralité de tâches de véhicules et la pluralité de véhicules en tant que noeuds et une pluralité d'affectations potentielles entre des véhicules et des tâches de véhicules en tant qu'arêtes du graphe,
   la sortie du modèle d'apprentissage automatique indiquant la favorabilité de la pluralité d'affectations à l'aide des arêtes du graphe, la fonction objective consistant à trouver la correspondance de cardinalité maximale qui contient la plus grande quantité d'arêtes qui maximise globalement la portée des véhicules et minimise les distances couvertes sélectionnées parmi des véhicules, et
   fournir le modèle d'apprentissage automatique.

OBTAINING INFORMATION
ON VEHICULAR TASKS

—— 110

OBTAINING INFORMATION
ON VEHICLES

—— 120

PROVIDING THE INFORMATION
TO A MACHINE-LEARNING MODEL

—— 130

ASSIGNING THE VEHICULAR
TASKS TO THE VEHICLES

—— 140

Fig. 1a

OBTAINING INFORMATION
ON VEHICULAR TASKS

—— 110

OBTAINING INFORMATION
ON VEHICLES

—— 120

PROVIDING THE INFORMATION
TO A MACHINE-LEARNING MODEL

—— 130

ASSIGNING THE VEHICULAR
TASKS TO THE VEHICLES

—— 140

SELECTING AT LEAST
A SUBSET OF ASSIGNMENTS

—— 145

Fig. 1b

VEHICLES
VEHICULAR
TASKS

INTERFACE

PROCESSING MODULE —— 12

STORAGE MODULE —— 14

—— 16

—— 100

Fig. 1c

| OBTAINING TRAINING INPUT DATA |
| --- |
| | ⌐ 210
| TRAINING A MACHINE-LEARNING MODEL |
| | ⌐ 220
| PROVIDING THE MACHINE-LEARNING MODEL |
| | ⌐ 230

## Fig. 2a

| OBTAINING TRAINING INPUT DATA |
| --- |
| | ⌐ 210
| SUBDIVIDING THE TRAINING INPUT DATA |
| | ⌐ 215
| TRAINING A MACHINE-LEARNING MODEL |
| | ⌐ 220
| INPUTTING THE TRAINING INPUT DATA INTO THE MACHINE-LEARNING MODEL |
| | ⌐ 222
| ASSIGNING VEHICLES TO VEHICULAR TASKS |
| | ⌐ 224
| EVALUATING THE ASSIGNMENT |
| | ⌐ 226
| ADJUSTING THE MACHINE-LEARNING MODEL |
| | ⌐ 228
| PROVIDING THE MACHINE-LEARNING MODEL |
| | ⌐ 230

## Fig. 2b

Fig. 2c

Fig. 3

Fig. 4

Fig. 5

Fig. 6

**REFERENCES CITED IN THE DESCRIPTION**

**Non-patent literature cited in the description**

- **YU JAMES J Q et al.** Online Vehicle Routing With Neural Combinatorial Optimization and Deep Reinforcement Learning. *IEEE TRANSACTIONS ON INTELLIGENT TRANSPORTATION SYSTEMS, IEEE, PISCATAWAY, Nu, USA,* 01 October 2019, vol. 20 (10), 3806-3817
- **O. VINYALS ; M. FORTUNATO ; N. JAITLY.** Pointer networks. *Advances in Neural Information Processing Systems,* 2015, 2692-2700
- **I. BELLO ; H. PHAM ; Q. V. LE ; M. NOROUZI ; S. BENGIO.** Neural combinatorial optimization with reinforcement learning. *arXiv preprint arXiv:1611.09940,* 2016

- **M. NAZARI ; A. OROOJLOOY ; L. SNYDER ; M. TAKÁC.** Reinforcement learning for solving the vehicle routing problem. *Advances in Neural Information Processing Systems,* 2018, 9839-9849
- **W. KOOL ; H. VAN HOOF ; M. WELLING.** Attention, learn to solve routing problems. *arXiv preprint arXiv:1803.08475,* 2018
- **M. D. ZEILER.** Adadelta: an adaptive learning rate method. *arXiv preprint arXiv:1212.5701,* 2012
- **R. J. WILLIAMS.** Simple statistical gradient-following algorithms for connectionist reinforcement learning. *Machine learning,* 1992, vol. 8 (3-4), 229-256